# EUROPEAN PATENT APPLICATION

(11) **EP 2 897 390 A2**
(43) Date of publication of application: **22.07.2015**
(21) Application number: 13791499.0
(22) Date of filing: 24.07.2013
(51) Int. Cl.: H04W 4/12

(54) **METHOD AND APPARATUS FOR PROCESSING COMMUNICATION SERVICE UNDER PUBLIC ACCOUNT**

(30) Priority: 13.09.2012 CN 201210337643
(71) Applicant: ZTE Corporation, Shenzhen, Guangdong 518057 (CN)
(72) Inventor: ZUO, Xiaofei, Shenzhen Guangdong 518057 (CN); LUO, Quan, Shenzhen Guangdong 518057 (CN); LI, Ling, Shenzhen Guangdong 518057 (CN); LI, Nairong, Shenzhen Guangdong 518057 (CN); LIU, Changshan, Shenzhen Guangdong 518057 (CN); SHI, Chuan, Shenzhen Guangdong 518057 (CN); YAN, Wenfen, Shenzhen Guangdong 518057 (CN); LIU, Ruiping, Shenzhen Guangdong 518057 (CN); NING, Haiyan, Shenzhen Guangdong 518057 (CN)
(74) Representative: Tischner, Oliver
(86) International application number: PCT/CN2013/080012
(87) International publication number: WO 2013/170831

(57) **Abstract**

A method and apparatus for processing a communication service under a public account are provided. The method includes that: a first mobile terminal displays a menu for prompting a user to set a public account priority level, and adjusts the public account priority level according to a user operation, wherein the first mobile terminal and at least one second mobile terminal share the public account; and when the first mobile terminal receives a communication service under the public account, and determines that the public account priority level meets a priority level condition for processing the communication service, the first mobile terminal processes the received communication service. The method and apparatus can avoid high processing complexity and low efficiency when all the mobile terminals logging into a public account receive a communication service sent to the account, and a user wants to process the received communication service only through one or several mobile terminals.

## Description

### TECHNICAL FIELD

The disclosure relates to the field of mobile communications, and in particular to a method and apparatus for processing a communication service under a public account.

### BACKGROUND

At present, with the continuous development of the mobile communication technology, mobile terminals have been widely used in people's life, and mobile communications have become the most popular way for communication. With the people's pursuit of high life quality, more and more intelligent mobile terminals appear in people's life, and an account of a mobile terminal also plays a more and more important role in intelligent mobile terminals.

A user of a mobile terminal may not only take an account as a payment account of an online application store, but also manage his/her own personal information through the account; the user may also manage contact and e-mail, send an Internet Protocol (IP) message, and initiate a Voice Over Internet Protocol (VOIP) video call. The account of a mobile terminal is a "key" of using the mobile terminal, and this "key" can open multiple "doors" simultaneously. That is to say, the account of the same user can log into multiple mobile terminals, wherein the mobile terminal can be a cell phone, a tablet computer and so on.

A user may log into the same account on multiple mobile terminals simultaneously; in some scenarios, when the user log into the same account on all these mobile terminals using, if priority levels of these mobile terminals are not adjusted, then when a network side sends a communication service to each mobile terminal under the account, the user needs to process a service from each mobile terminal using the same account, namely processing a communication service, or refusing to process a communication service, thereby causing a lot of inconvenience to the user. For example, all the mobile terminal a, the mobile terminal b, the mobile terminal c and the mobile terminal d sharing a public account 1 receive a VOIP video call service, if the user A wants to accept the communication service, namely answering the video call, under the public account 1 through the mobile terminal a, then the user A is further required to "reject" the other three mobile terminals, which is not convenient for the user to operate.

### SUMMARY

The disclosure provides a method and apparatus for processing a communication service under a public account, so as to avoid high processing complexity and low efficiency when a user owning the mobile terminal logging into a public account processes a communication service under the public account.

A method for processing a communication service under a public account includes that:
a first mobile terminal displays a menu for prompting a user to set a public account priority level, and adjusts the public account priority level according to a user operation, wherein the first mobile terminal and at least one second mobile terminal share a public account; and
when the first mobile terminal receives a communication service under the public account, and determines that the public account priority level meets a priority level condition for processing the communication service, the first mobile terminal processes the received communication service.

In an embodiment, the first mobile terminal displaying the menu for prompting the user to set the priority of the public account may include that: the first mobile terminal acquires an operation interface for setting the public account priority level according to a query instruction of the user, and displays the operation interface to the user; or
when the first mobile terminal detects that there is at least one second mobile terminal which is configured with a Near Field Communication (NFC) chip and uses the public account in a local specified range, the first mobile terminal activates the operation interface for setting the public account priority level, and displays the operation interface to the user.

In an embodiment, after the first mobile terminal receives the communication service under the public account, and before it determines that the public account priority level meets the priority level condition for processing the communication service, the method further may include that: the first mobile terminal determines whether to process the received communication service under the public account according to the public account priority level set by the first mobile terminal.

In an embodiment, processing the received communication service when the first mobile terminal determines that the public account priority level meets the priority level condition for processing the communication service, may include: processing the received communication service when the first mobile terminal determines that the public account priority level is the highest among public account priority levels that these mobile terminals using the public account have,; or,
processing the received communication service when the first mobile terminal determines that the public account priority level is not either the highest or the lowest among priority levels that these mobile terminals using the public account have,; or,
processing the received communication service when the first mobile terminal determines that the public account priority level is the lowest among priority levels that these mobile terminals using the public account have,.

In an embodiment, processing the received communication service may include: displaying an interface for prompting the user to confirm the processing, and processing the received communication service after the user carries out a confirmation operation.

An apparatus for processing a communication service under a public account includes:
an adjusting unit, which is configured to display the menu for prompting a user to set a public account priority level, and adjust the public account priority level of a first mobile terminal where the adjusting unit is located according to a user operation, wherein the first mobile terminal where the adjusting unit is and at least one second mobile terminal share the public account; and
a processing unit, which is configured to, when receiving a communication service under the public account, and determining that the public account priority level meets a priority level condition for processing the communication service, process the received communication service.

In an embodiment, the adjusting unit is configured to acquire an operation interface for setting the public account priority level according to a query instruction from the user, and display the operation interface to the user; or the adjusting unit is configured to, when detecting that there is at least one second mobile terminal which is configured with the NFC chip and uses the public account in a local specified range, activate the operation interface for setting the public account priority level, and display the operation interface to the user.

In an embodiment, the processing unit is configured to, after receiving the communication service under the public account, and before determining that the public account priority level which is set for the first mobile terminal meets the priority level condition for processing the communication service, determine whether to process the received communication service under the public account according to the public account priority level set by the first mobile terminal.

In an embodiment, the processing unit is configured to, when determining that the public account priority level which is set for the first mobile terminal is the highest among public account priority levels that these mobile terminals using the public account have, process the received communication service; or the processing unit is configured to, when determining that the public account priority level which is set for the first mobile terminal is not either the highest or the lowest among public account priority levels that these mobile terminals using the public account have, process the received communication service; or the processing unit is configured to, when determining that the public account priority level which is set for the first mobile terminal is the lowest among public account priority levels that these mobile terminals using the public account have, process the received communication service.

In an embodiment, the processing unit is configured to, after determining that the public account priority level which is set for the first mobile terminal meets the priority level condition for processing the communication service, display the interface for prompting the user to confirm the processing, and process the received communication service after the user carries out a confirmation operation.

In the embodiments, a method for processing a communication service under a public account is presented; the method includes that: a first mobile terminal displays a menu for prompting a user to set a public account priority level, and adjusts the public account priority level according to a user operation, wherein the first mobile terminal and at least one second mobile terminal share the public account; and when the first mobile terminal receives a communication service under a public account, and determines that the public account priority level which is set for the first mobile terminal meets a priority level condition for processing the communication service, the first mobile terminal processes the received communication service; thus, when multiple mobile terminals log into the public account, all the mobile terminals logging into the public account receive the communication service sent to the public account, and if the user wants to process the received communication service through one or several mobile terminals, the user only needs to set the account priority level of each mobile terminal, instead of making the other mobile terminals which use the public account but do not process the communication service carry out a "reject" operation to the received communication service, which reduces the complexity of processing the communication service under the public account, and improves the efficiency.

### BRIEF DESCRIPTION OF THE DRAWINGS

Fig. 1 is a functional structure diagram of a first mobile terminal in an embodiment of the disclosure;
Fig. 2 is a detailed flowchart that a mobile terminal on which a public account is logged into processes a communication service under the public account in an embodiment of the disclosure;
Fig. 3A is an interface diagram of a "setting" menu in an embodiment of the disclosure;
Fig. 3B is an interface diagram of a "personalized setting" menu in an embodiment of the disclosure; and
Fig. 3C is an operation interface diagram of a "setting account priority levels" menu in an embodiment of the disclosure.

### DETAILED DESCRIPTION

In the present mobile communications, consumers are looking for an easier way to interact with an immediate environment and enable communications among their electronic apparatuses; the Near Field Communication (NFC) plays a crucial role in such communications world.

The NFC getting a convenient wireless connection is a technology which achieves short-distance wireless communications based on a cell phone or other mobile terminals; NFC is a radio-frequency technology running mainly based on a frequency of 13.56MHz, and is for a short range transmission not long than 20 centimetres; the data transmission speed may be 106Kbit/s, 212Kbit/s or 424Kbit/s; the transmission range is smaller than that of the non-contact radio frequency identification, but it is advantaged in short distance, high bandwidth, low energy consumption and so on; the NFC provides a very convenient communication mode for all consumer electronics.

At present, the NFC technology is mainly applied to an access control system, tag tracking, ticket service, public transport, electronic payment and so on. All the prevalent NFC chips have a special signal; for ensuring the chip to continue working when a mobile terminal is powered off, the signal is usually increased by default in design; so, an NFC function of the cell phone with the NFC function is still kept in a working state under a power-off state.

For reducing the complexity of processing, by users, the received communication services through one or several mobile terminals on which a public account is logged into, in the embodiments of the disclosure, the public account priority levels of the mobile terminals using the public account is set; only when a mobile terminal receives a communication service under the public account, and determines that the public account priority level which is set for the mobile terminal meets a priority level condition for processing the communication service, the received communication service is processed. Thus, when the public account is logged into on multiple mobile terminals, and if the user wants to process the received communication service through one or several mobile terminals, there is no need to make the other mobile terminals using the public account carry out a "reject" operation to the received communication service, which reduces the complexity of processing the communication service under the public account, and improves the efficiency.

The preferred embodiments of the disclosure are elaborated below with reference to the accompanying drawings.

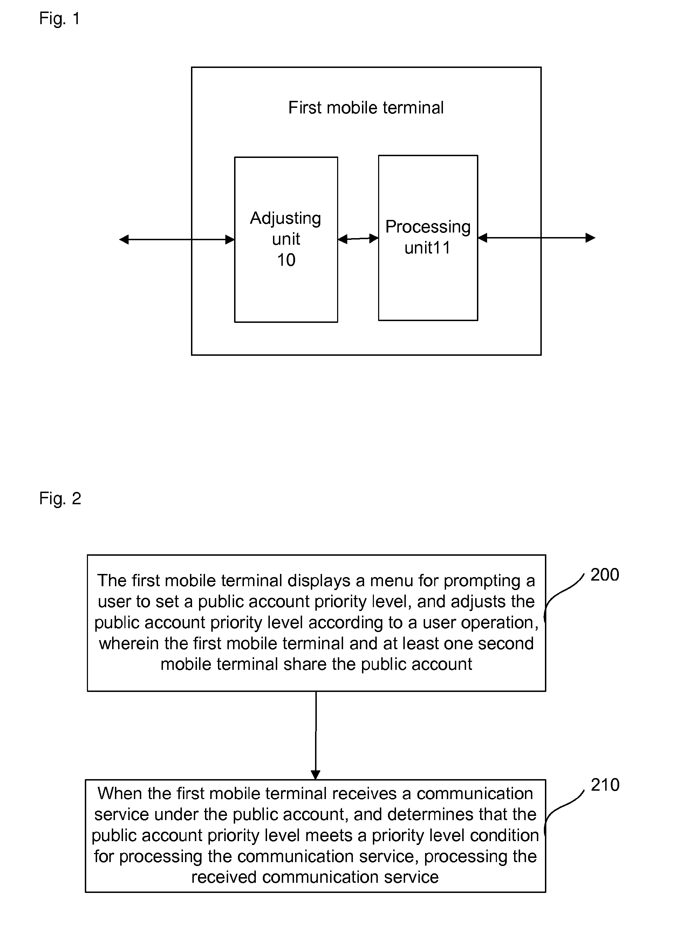

With reference to Fig. 1, in the present embodiment of the disclosure, the first mobile terminal includes: an adjusting unit 10 and a processing unit 11; wherein,
the adjusting unit 10 is configured to display a menu for prompting a user to set a public account priority level, and adjust the public account priority level of a local mobile terminal where the adjusting unit is located according to a user operation, wherein the local mobile terminal where the adjusting unit is located is a first mobile terminal; the first mobile terminal and at least one second mobile terminal share the public account;
the processing unit 11 is configured to, when receiving the communication service under the public account, and determining that the public account priority level which is set for the local mobile terminal meets the priority level condition for processing the communication service, process the received communication service.

Based on the above technical solution, with reference to Fig. 2, in the present embodiment of the disclosure, the detailed flow that the mobile terminal on which the public account is logged into processes the communication service under the public account is as follows.

Step 200 is that the first mobile terminal displays the menu for prompting the user to set the public account priority level, and adjusts the public account priority level according to the user operation, wherein the first mobile terminal and at least one second mobile terminal share the public account.

In the present embodiment of the disclosure, there are at least two ways for the first mobile terminal to display the menu for prompting the user to set the priority of the public account: the first mobile terminal acquires an operation interface for setting the public account priority level according to a query instruction from the user, and displays the operation interface to the user; or, when the first mobile terminal detects that there is at least one second mobile terminal which is configured with the NFC chip and uses the public account within a local specified range, the first mobile terminal activates the operation interface for setting the public account priority level, and displays the operation interface to the user; wherein the specified range is within the communication range of the NFC chip.

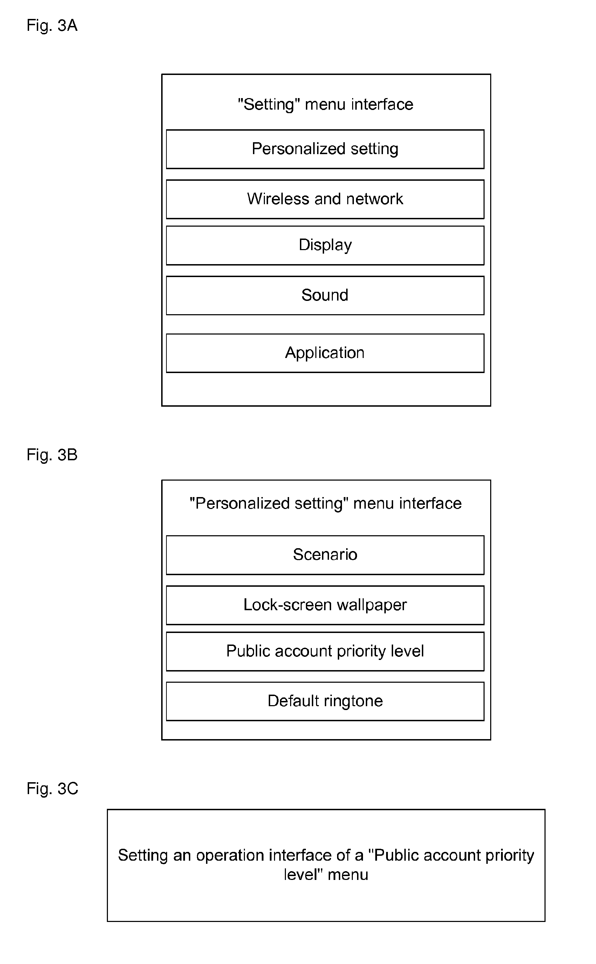

For example, a "public account priority level" menu of the first mobile terminal A is a submenu of the "personalized setting" menu, wherein the "personalized setting" menu is a submenu of the "setting" menu, then the specific operation when the first mobile terminal A acquires the operation interface for setting the public account priority level according to the query instruction from the user is that: firstly, the first mobile terminal A acquires the interface of the "setting" menu according to a click of the user, wherein the interface of the "setting" menu is application icons of the submenus including the "personalized setting" menu, a "wireless and network" menu, a "display" menu, a "sound" menu and an "application" menu, as shown in Fig. 3A; secondly, the first mobile terminal A acquires the interface of the "personalized setting" menu which is the submenu of the "setting" menu according to a click of the user, wherein the interface of the "personalized setting" menu is application icons of the submenus including a "scenario" menu, a "lock-screen wallpaper" menu, the "public account priority level" menu and a "default ringtone" menu, as shown in Fig. 3B; thirdly, the first mobile terminal A acquires the operation interface for setting the public account priority level according to a click of the user, namely the operation interface of the "public account priority level" menu, and displays the operation interface to the user, as shown in Fig. 3C.

For another example, the public account S is logged into on all the first mobile terminal A, the second mobile terminal B and the third mobile terminal C, and all the first mobile terminal A, the second mobile terminal B and the third mobile terminal C are configured with the NFC chip, then when the first mobile terminal A detects that there is the second mobile terminal B within a range around the first mobile terminal A, the first mobile terminal A activates the operation interface for setting the public account priority level, and displays the operation interface to the user; similarly, the first mobile terminal A can also activate the local operation interface for setting the public account priority level through the third mobile terminal C, and displays the operation interface to the user.

Step 210 is that when the first mobile terminal receives the communication service under the public account, and determines that the public account priority level meets the priority level condition for processing the communication service, the first mobile terminal processes the received communication service.

In the present embodiment of the disclosure, the step of when the first mobile terminal determines that the public account priority level meets the priority level condition for processing the communication service, processing the received communication service, includes: when the first mobile terminal determines that the public account priority level which is set for the local mobile terminal is the highest among priority levels that these mobile terminals using the public account have, the first mobile terminal processes the received communication service;
or, when the first mobile terminal determines that the public account priority level which is set for the local mobile terminal is not either the highest or the lowest among priority levels that these mobile terminals using the public account have, the first mobile terminal processes the received communication service;
or, when the first mobile terminal determines that the public account priority level which is set for the local mobile terminal is the lowest among priority levels that these mobile terminals using the public account have, the first mobile terminal processes the received communication service;
wherein the communication service may be communication information.

An illustration is given below by taking the step of processing the received communication service when the public account priority level set by the local mobile terminal is not either the highest or the lowest among priority levels that these mobile terminals using the public account have for example.

The public account 1 is logged into on all the first mobile terminal A, the second mobile terminal B and the third mobile terminal C, wherein the public account priority level of the first mobile terminal A is high, the public account priority level of the second mobile terminal B is medium, and the public account priority level of the third mobile terminal C is low;
at some point, all the first mobile terminal A, the second mobile terminal B and the third mobile terminal C receive a video chat from the public account 1; the first mobile terminal A, the second mobile terminal B and the third mobile terminal C respectively determine whether their own priority levels are either non-highest or non-lowest according to the received priority level information corresponding to the public account 1. Since only the priority level of the second mobile terminal B is medium, only the second mobile terminal B processes the received video chat which is sent to the public account 1 according to the user operation; since the priority level of the first mobile terminal A is the highest, and the priority level of the third mobile terminal C is the lowest, although the first mobile terminal A and the third mobile terminal C received the communication service, namely the video chat, from the public account 1, they will close the processing of the video chat automatically, instead of waiting for the user to process the communication service, namely the video chat.

In the present embodiment of the disclosure, the priority level information may be represented by a flag bit of the terminal; for example, the flag bit of the high priority level is 2, the flag bit of the priority level which is either the non-highest or non-lowest is 1, and the flag bit of the low priority level is 0; of course, it is not limited to such representation, other representations will not be enumerated one by one here.

In the present embodiment of the disclosure, only under the condition that the first mobile terminal receives the communication service under the public account, and determines that the public account priority level which is set for the local mobile terminal meets the priority level condition for processing the communication service, the received communication service is processed. For example, the public account 1 is logged into all the first mobile terminal A, the second mobile terminal B and the third mobile terminal C, at some point, all the first mobile terminal A, the second mobile terminal B and the third mobile terminal C receive a video call from the public account 1, the first mobile terminal A, the second mobile terminal B and the third mobile terminal C respectively determine whether they meet the priority level condition for processing the video call according to their respective priority level information corresponding to the public account 1. Under the condition of processing information when the priority level corresponding to the public account 1 is the highest, if only the first mobile terminal A has the highest priority level, then only the first mobile terminal A processes the video call according to the user operation; since the priority levels of the second mobile terminal B and the third mobile terminal C are not the highest priority level, the second mobile terminal B and the third mobile terminal C automatically close the video call when receiving the VOIP video call; thus, when the user wants to process the received communication service through the first mobile terminal A, there is no need to make the second mobile terminal B and the third mobile terminal C using the public account carry out a "reject" operation to the received communication service, which reduces the complexity of processing the communication service under the public account, and improves the efficiency.

The first mobile terminal determines whether to process the received communication service under the public account according to the public account priority level set by the first mobile terminal. For example, all the three terminals receive a message sent to the public account 1, the first mobile terminal A determines whether its own priority level is the highest, if the first mobile terminal A finds that its own priority level is 2, then the first mobile terminal A displays the message; the second mobile terminal B determines whether its own priority level is the highest, if the second mobile terminal B finds that its own priority level is 1, which is not the highest, then the second mobile terminal B automatically shields display of the message; similarly, the third mobile terminal C determines whether its own priority level is the highest, if the third mobile terminal C finds that its own priority level is 0, which is not the highest, then the third mobile terminal C automatically shields display of the message; the priority level of each terminal is saved in each terminal, and only when the message comes, a determination is made to the priority level.

Note that, there may be more than one mobile terminal with the highest priority level; and multiple mobile terminals with the highest priority level may be set as needed.

In the present embodiment of the disclosure, a user may set a mobile terminal to determine its own public account priority level when receiving all the communication services from a logged account; the user may also set the mobile terminal to determine its own public account priority level only after receiving some communication services from the logged account. Thus, after the first mobile terminal receives a communication service under the public account, and before it determines that the public account priority level which is set for the local terminal meets the priority level condition for processing the communication service, the method further includes: the first mobile terminal determines that the received communication service is the communication service for which the public account priority level of the first mobile terminal is required to be detected.

In the present embodiment of the disclosure, for avoiding processing the communication service of the first mobile terminal because of accidental operation, In an embodiment, when the first mobile terminal detects that the user processes the communication service, it prompts, through an operation interface, the user whether he/she is sure to process the communication service, wherein the options displayed by the operation interface are "yes" and "no". Under the condition that the user clicks "yes", the first mobile terminal starts the communication service that the user processes; under the condition that the user clicks "no", the first mobile terminal does not make any processing.

For example, under the condition that the first mobile terminal A receives the communication service, namely the video call, under the public account 1, and determines that the public account priority level which is set for the local terminal meets the priority level condition for processing the communication service, when the first mobile terminal A detects that the user clicks a button for answering the video call, the first mobile terminal A prompts, through an operation interface, the user whether he/she is sure to process the communication service (namely the video call); if the user clicks the option "yes", the first mobile terminal A starts the video call; if the user clicks the option "no", the first mobile terminal A does not make any processing.

To sum up, in the present embodiment of the disclosure, a method for processing a communication service under a public account is presented; the method includes that the first mobile terminal displays a menu for prompting a user to set a public account priority level, and adjusts the public account priority level according to a user operation, wherein the first mobile terminal and at least one second mobile terminal share the public account; and when the first mobile terminal receives a communication service under the public account, and determines that the public account priority level meets a priority level condition for processing the communication service, the first mobile terminal processes the received communication service. Thus, when multiple mobile terminals log into the public account, if the user wants to process the received communication service through one or several mobile terminals, the user only needs to set the account priority level of each mobile terminal, instead of making the other mobile terminals using the public account carry out a "reject" operation to the received communication service, which reduces the complexity of processing the communication service under the public account, and improves the efficiency.

The disclosure is described with reference to the flowchart and/or the block diagram of the method, the device (system) and the computer program product according to an embodiment of the disclosure. It should be understood that each flow and/or block in the flowchart and/or the block diagram, and combination of the flow and/or block in the flowchart and/or the block diagram may be implemented by computer program instructions. These computer program instructions may be provided to a processor of a general-purpose computer, a special-purpose computer, an embedded processor or other programmable data processing devices to generate a machine, so that the instructions executed through the processor of a computer or other programmable data processing devices generate a device for implementing functions specified in one or multiple flows of the flowchart and/or one or multiple blocks of the block diagram.

These computer program instructions may also be stored in a computer readable memory which can guide a computer or other programmable data processing devices to work in a particular way, so that the instructions stored in the computer readable memory generate a product including an instruction device; the instruction device implements the functions specified in one or multiple flows of the flowchart and/or one or multiple blocks of the block diagram.

These computer program instructions may also be loaded on a computer or other programmable data processing devices, so that a series of operation steps are executed on the computer or other programmable devices to generate processing implemented by the computer; thus, the instructions executed on the computer or other programmable devices provide the steps for implementing the functions specified in one or multiple flows of the flowchart and/or one or multiple blocks of the block diagram.

Although the preferred embodiments of the disclosure have been described, once those skilled in the art know the basic creative concept, they can make modifications and variations to these embodiments. Thus, the attached claims are intended to include the embodiments and all the modifications and variations falling within the scope of the disclosure.

Therefore, those skilled in the art can make various modifications and variations to the disclosure without departing from the spirit and scope of the disclosure. Thus, if these modifications and variations of the disclosure fall within the scope of the claims of the disclosure and equivalent technologies thereof, the disclosure is also intended to include these modifications and variations.

## Claims

1. A method for processing a communication service under a public account, comprising:
displaying, by a first mobile terminal, a menu for prompting a user to set a public account priority level, and adjusting the public account priority level according to a user operation, wherein the first mobile terminal and at least one second mobile terminal share a public account; and
when the first mobile terminal receives a communication service under the public account, and determines that the public account priority level meets a priority level condition for processing the communication service, processing the received communication service.

2. The method according to claim 1, wherein displaying, by the first mobile terminal, the menu for prompting the user to set the public account priority level comprises:
acquiring, by the first mobile terminal, an operation interface for setting the public account priority level according to a query instruction from the user, and displaying the operation interface to the user; or
activating, by the first mobile terminal, the operation interface for setting the public account priority level, and displaying the operation interface to the user when the first mobile terminal detects that there is at least one second mobile terminal which is configured with a Near Field Communication (NFC) chip and uses the public account in a local specified range.

3. The method according to claim 2, further comprising: after the first mobile terminal receives the communication service under the public account, and before the first mobile terminal determines that the public account priority level meets the priority level condition for processing the communication service,
determining, by the first mobile terminal, whether to process the received communication service under the public account according to the public account priority level set by the first mobile terminal.

4. The method according to claim 1, 2 or 3, wherein processing the received communication service when the first mobile terminal determines that the public account priority level meets the priority level condition for processing the communication service, comprises:
processing the received communication service when the first mobile terminal determines that the public account priority level is highest among public account priority levels that these mobile terminals using the public account have; or,
processing the received communication service when the first mobile terminal determines that the public account priority level is not either highest or lowest among public account priority levels that these mobile terminals using the public account have; or,
processing the received communication service when the first mobile terminal determines that the public account priority level is lowest among public account priority levels that these mobile terminals using the public account have..

5. The method according to claim 4, wherein processing the received communication service comprises:
displaying an interface for prompting the user to confirm the processing, and processing the received communication service after the user carries out a confirmation operation.

6. An apparatus for processing a communication service under a public account, comprising:
an adjusting unit, which is configured to display a menu for prompting a user to set a public account priority level, and adjust the public account priority level of a first mobile terminal where the adjusting unit is located according to a user operation, wherein the first mobile terminal and at least one second mobile terminal share the public account; and
a processing unit, which is configured to, when receiving a communication service under the public account, and determining that the public account priority level meets a priority level condition for processing the communication service, process the received communication service.

7. The apparatus according to claim 6, wherein the adjusting unit is configured to acquire an operation interface for setting the public account priority level according to a query instruction from the user, and display the operation interface to the user; or
the adjusting unit is configured to, when detecting that there is at least one second mobile terminal which is configured with a Near Field Communication (NFC) chip and uses the public account in a local specified range, activate the operation interface for setting the public account priority level, and display the operation interface to the user.

8. The apparatus according to claim 7, wherein the processing unit is configured to, after receiving the communication service under the public account, and before determining that the public account priority level which is set for the first mobile terminal meets the priority level condition for processing the communication service, determine whether to process the received communication service under the public account according to the public account priority level.

9. The apparatus according to claim 6, 7 or 8, wherein,
the processing unit is configured to process the received communication service when determining that the public account priority level which is set for the first mobile terminal is highest among public account priority levels that these mobile terminals using the public account have; or
the processing unit is configured to process the received communication service when determining that the public account priority level which is set for the first mobile terminal is not either highest or lowest among public account priority levels that these mobile terminals using the public account have; or
the processing unit is configured to process the received communication service when determining that the public account priority level which is set for the first mobile terminal is lowest among public account priority levels that these mobile terminals using the public account have.

10. The apparatus according to claim 9, wherein the processing unit is configured to, after determining that the public account priority level which is set for the first mobile terminal meets the priority level condition for processing the communication service, display an interface for prompting the user to confirm the processing, and process the received communication service after the user carries out a confirmation operation.
